# EUROPEAN PATENT APPLICATION

(11) **EP 0 930 212 A1**
(43) Date of publication of application: **21.07.1999**
(21) Application number: 98100417.9
(22) Date of filing: 13.01.1998
(51) Int. Cl.: B62B 1/18

(54) **Motor driven wheelbarrow**

(71) Applicant: Sasia, Pierluigi, 12030 Villanovetta di Verzuolo (CN) (IT)
(72) Inventor: Silvano, Cavo, 12039 Verzuolo (CN) (IT)
(74) Representative: Robba, Pierpaolo

(57) **Abstract**

A barrow (1) adapted for carrying loose materials such as sand, gravel and the like comprises a small motor (3) of the type used in small motorcycles secured to the bearing frame of the barrow. The motion from such motor (3) is transmitted to the front wheel (25) of the barrow through a reduction gear train adapted to achieve an advancing speed of said barrow compatible with the user's walking pace.

## Description

The present invention relates to a power or motor-driven barrow adapted for carrying with ease and a minimum effort loose materials that are usually transported by means of a conventional wheel barrow.

As it is known, (wheel) barrows are very old known devices for carrying materials, usually loose materials, and are moved by raising the barrow handles and pushing the barrow that advances on a rolling front wheel.

However, in order to transport the material the user must apply an effort to the barrow, for both raising and pushing the barrow, with the overall strain depending on the amount of loaded material, the weigh of which opposes the barrow movement.

It is an object of the present invention to overcome the above described drawbacks by providing a barrow that is quite similar to the known barrows, but is equipped with a driving motor so that the user is no longer required to exert a pushing action for its movement, but only a raising action.

In accordance with a main feature of the present invention, to the bearing frame of the barrow there is secured a small internal combustion motor, of the type used in small motorcycles, and such motor transmits the motion to the front wheel of the barrow through a suitable and successive gear train for achieving an advancing speed of the barrow compatible with the user pace.

More precisely, the transmission of the motion from the motor to the barrow front wheel is obtained in the following way.

The IC motor drives a first pulley coaxial with the motor shaft, and through a belt such first pulley drives a second pulley that in turn drives a first gear wheel through a countershaft. The first gear wheel is coupled to a second gear wheel through a transmission chain, such second gear wheel is coaxial with a third gear wheel directly meshing a fourth gear wheel coaxial with and secured to the rotation shaft of the barrow front wheel.

The invention will be now described in detail with reference to the accompanying drawings illustrating a not limiting embodiment of the invention, in which:

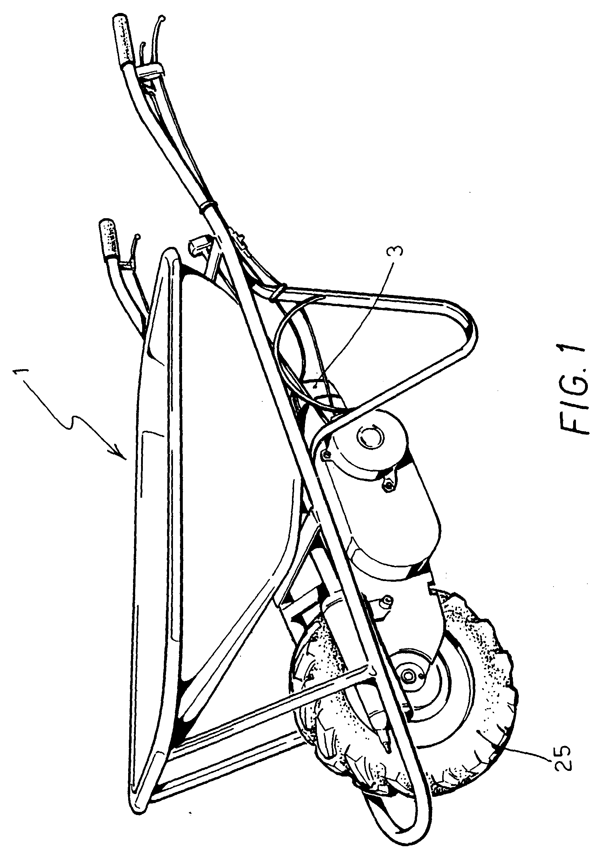

Fig. 1 is a perspective view of a barrow incorporating a motor in accordance with the invention;

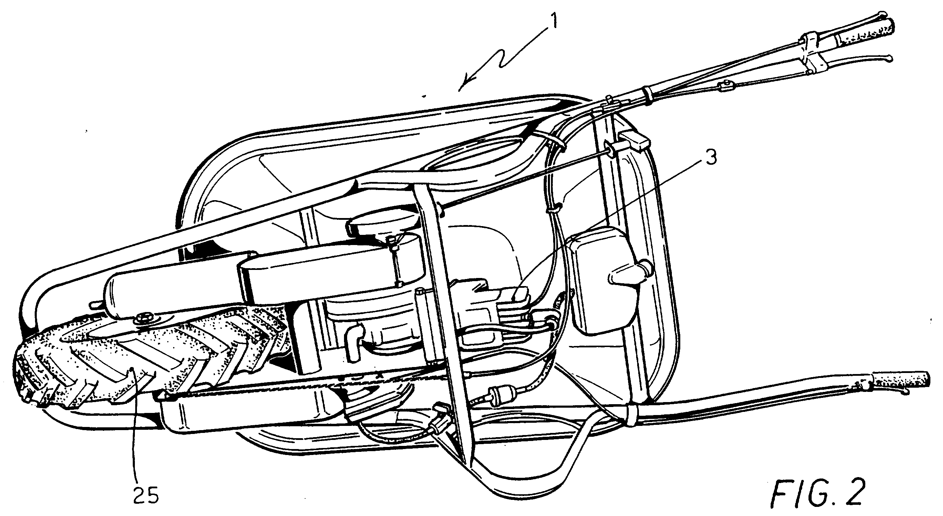

Fig. 2 is a bottom view of the barrow of Fig. 1;

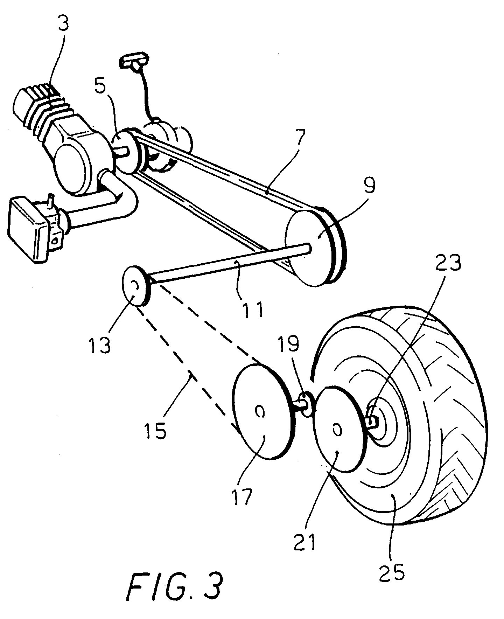

Fig. 3 is a perspective schematic view illustrating how the motion is transmitted from the motor to the barrow front wheel.

In the Figures, a barrow according to the invention has been indicated by numeral reference 1 and a small size internal combustion motor fitted to the barrow bearing frame has been indicated by reference 3.

The motor 3 drives a first pulley 5 coaxial with the motor shaft and through a belt 7 this pulley drives a second pulley 9 that through a countershaft 11 drives a first gear wheel 13 coupled to a second gear wheel 17 through a transmission chain 15.

This gear wheel 17 is coaxial with a third gear wheel 19 directly meshing a fourth gear wheel 21 mounted coaxially with the rotation shaft 23 of the front wheel 25 of the barrow 1.

Thanks to the disclosed arrangement, the number of rotations per minute (rpm) of the front wheel is strongly reduced with respect to the rotation speed of the motor 3; such a reduction is such that the ueser can control and move the barrow at a normal walking pace, without requiring an appreciable pushing strain by the user.

## Claims

1. A barrow (1) adapted for carrying loose materials such as sand, gravel and the like, characterised in that a small motor (3) of the type used in small motorcycles is secured to the bearing frame of said barrow, the motion from such motor (3) being transmitted to the front wheel (25) of the barrow through a reduction gear train adapted to reduce the advancing speed of said barrow to a value compatible with the user's walking pace.

2. A barrow for carrying loose materials according to claim 1, characterised in that said reduction gear train comprises:
a first pulley (5) coaxial to and driven by said motor (3), said first pulley driving a second pulley (9) through a belt (7), said second pulley (9) driving a first gear wheel (13) through a countershaft (11), said first gear wheel (13) being coupled through a transmission belt (15) to a second gear wheel (17); said second gear wheel (17) being coaxial with a third gear wheel (19) directly meshing a fourth gear wheel (21) coaxial with the rotation shaft (23) of the front wheel (25) of said barrow.

3. A barrow for carrying loose materials according to claim 1 or 2, characterised in that the rotation speed of the barrow front wheel (25) is strongly reduced with respect the rotation speed of said motor (3), whereby said barrow can be pushed and advanced by a user walking at a normal pace without applying any strain to displace said barrow (1).
